(19)

**Europäisches Patentamt**
**European Patent Office**
**Office européen des brevets**

(11) **EP 4 653 151 A1**

(12) **EUROPEAN PATENT APPLICATION**

(43) Date of publication:
**26.11.2025 Bulletin 2025/48**

(51) International Patent Classification (IPC):
**B25J 9/16** (2006.01)

(21) Application number: **25178800.6**

(22) Date of filing: **26.05.2025**

(52) Cooperative Patent Classification (CPC):
**B25J 9/1692; B25J 9/1653; B25J 9/1694;**
**G01B 11/026; G01B 11/14;** G05B 2219/37275;
G05B 2219/39034; G05B 2219/39412

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH LA MA MD TN**

(30) Priority: **24.05.2024 EP 24178104**

(71) Applicants:
• **Pmrobots GmbH**
  **78126 Königsfeld im Schwarzwald (DE)**

• **Universidad Politécnica de Madrid**
  **28040 Madrid (ES)**

(72) Inventors:
• **FERRERAS HIGUERO, Eugenio**
  **78126 Königsfeld im Schwarzwald (DE)**
• **VIZÁN IDOIPE, Antonio**
  **28040 Madrid (ES)**
• **VILLAVERDE SAN JOSÉ, Mónica**
  **28040 Madrid (ES)**

(74) Representative: **Elion IP, S.L.**
  **Paseo Castellana, 150-4 dcha**
  **28046 Madrid (ES)**

(54) **DETERMINATION OF ROBOT PARAMETERS**

(57) A method comprising: tracking a robot, based on the distance between a robot point and a reference point. This distance is obtained by means of a sensor; an extendable type measuring device with an articulation at each of its ends, one for a robot point and the other for the reference point, which makes it possible to track the movements of a robot; a relative displacement and guidance mechanism to ensure the proper transmission of micromovements; the determination of the deviations of a robot with respect to a reference point, introducing the calculation according to embodiments. deviations of a robot from its nominal position, from the measurement between a robot element and a reference point; and obtaining the deviations in the movements of a robot, according to the path executed, from the projections of these deviations obtained according to the geometry held at each nominal position of the path.

FIG. 3

**Description**

**TECHNICAL SECTOR**

The present invention refers to the robot sector. More specifically, the invention refers to a system and method for the determination of pose accuracy, path accuracy and dynamic parameters of a robot, based on the knowledge of the distance between a point, generally fixed, and an end of the robot using a device, being able to measure the deviation with respect to the nominal position.

**BACKGROUND TO THE INVENTION**

Robots are used in a variety of applications such as handling, deburring, welding and low precision machining of robot work, among others. In these applications it is generally not critical to know with high precision their position or the movement to be performed.

There are other applications, such as machining, where, in order to use robots, it is necessary to know their position or path with a high degree of accuracy.

High-precision robot position and path measurement systems such as cameras or laser systems are well known. However, these systems have a high cost, as they are more complex due to their high number of sensors, are difficult to focus and are sensitive to ambient lighting, require the presence of qualified personnel or require installations that cannot be used in high precision processing cells, such as machining, due to lack of space or working conditions.

Systems for measuring the position and trajectory of robots by means of several interferometric systems are also known. However, these systems cannot obtain the accuracy without making at least three measurements in total, either jointly with the interferometric systems available or individually with at least one of them, repeating the measurement several times from different points. This implies a high cost of the device or a significant operating cost.

In addition, there are known measurement systems that use a combination of an interferometric system and two encoders and, generally, a sophisticated turret system at the base, of considerable dimensions, for positioning. However, these systems cannot achieve the accuracy only with distance, as well as being costlier and difficult to position.

Methods are known that measure pose accuracy with any of the above systems. They obtain only the pose accuracy, but not the path accuracy or dynamic characteristics. So, for example, systems with one laser system or three interferometers or one interferometer and three measurements or one interferometer and two encoders, what they do is first get the Cartesian position, and then they can get the deviation or deviations from the nominal position.

There are also known low-cost measuring systems, such as small-sized dial gauges, which can work in areas with little space or unfavourable working conditions. However, these systems are very inaccurate. Other simple systems known as laser gauges are more accurate. However, in both cases, they only allow the analysis of the accuracy at one position at one point in the robot's working space. It would be desirable to have a measurement system, preferably simple with a single measuring element and requiring a single measurement, that has high accuracy, is robust, has a small installation adapted to the working conditions, the ability to analyse accuracies in large working spaces, usable by unskilled personnel, low cost and that can obtain pose accuracy and/or path accuracy and/or dynamic characteristics. In this way, its use could be generalised in applications where a high degree of pose and/or path accuracy is required.

**GENERAL DESCRIPTION**

A first aspect of the invention relates to a system for determining one or more of, among others: pose accuracy, path accuracy, and dynamic parameters of a robot. A second aspect of the invention relates to a method for determining one or more of, among others: pose accuracy, path accuracy, and dynamic parameters of a robot.

In preferred embodiments, the system and method enable the determination of at least two of the above accuracies or one of the accuracies and the dynamic parameters. In more preferred embodiments, the system and method allow for the determination of all of the above accuracies as well as the dynamic parameters.

Each of the system and method tracks a robot, based on the distance between a robot point and a reference point. This distance is obtained by means of a sensor preferably without the need of encoder(s) and/or more than one measurement. The system and method also perform the determination of deviations of the robot from its nominal position, based on the at least one measurement between the robot point (of a robot element, e.g. a tool or terminal element of the robot, also referred to as a TCP) and the reference point. The system and method also obtain deviations in some or all of the radial, transverse and/or tangential components to the motions of the robot element(s), according to the path executed, from projections of the deviations of the robot from its nominal position, according to the geometry held at each nominal position of the path.

The system comprises:

> a sensor for distance measurement, which may be linked by means of a conductive element to a conditioner, which processes the signal received from the sensor, which is passed from the conditioner to at least one processor, or which may be linked directly to the at least one processor by means of a conductive element;

a extendable type measuring device with one articulation at each end, a first articulation for a robot point and the other, i.e. a second articulation, for a reference point, for tracking the movements of a robot; a relative displacement and guidance mechanism, which preferably ensures an adequate transmission of micro-movements. The relative displacement and guidance mechanism allows the extension of the measuring device according to the movements of the robot element(s) picked up by the sensor; and the at least one processor and at least one memory configured for at least performing robot tracking, determining robot deviations, and obtaining the deviations in robot movements. Optionally, the system may comprise the conditioner and/or the conductive element.

It is not necessary for the joints to be replaced by a turret, so that, in preferred embodiments, the system does not comprise a turret.

The method comprises:

tracking a robot from a distance between a robot point and a reference point, external or not to the robot, by means of distance measurements from a sensor;
determining deviations of the robot from its nominal position from measurements between the robot point (on a robot element) and the reference point;
calculating deviations in robot movements (of one or more robot points, i.e. one or more robot elements or tools), according to a path executed by the robot, at least on the basis of projections of the robot deviations from its nominal position according to a geometry specified at each nominal position of the path.

From the measurement obtained, i.e. from the measurement between the robot element and the reference point, the total deviation from the nominal position can be measured.

The system and method allow, e.g. with at least one processor, to calculate the deviations in any or all radial, transverse and/or tangential directions, with respect to the path, at one or each of the positions. For this purpose, a total deviation in radial, transverse and/or tangential deviation for each position of the trajectory is transformed, for example, with at least one processor, by geometrical methods.

The system and the method also make it possible to determine in a simple manner the dynamic properties of each element of the robot, after obtaining the positions and deflections of the element or elements whose position or trajectory are being measured. And, in this regard, in preferred embodiments, the system and method only comprise and/or use a single sensor, the sensor for distance measurement. In some embodiments, the system obtains the dynamic parameters of the robot by determining the transfer function of each drive and its subsequent kinematic chain, linking the measurement of the robot displacement in the partial or full range of the desired robot motion (output signal) to the setpoint signal sent by the controller.

A third aspect of the invention relates to a data processing device or system comprising means for carrying out the method according to the second aspect of the invention.

A fourth aspect of the invention relates to an assembly comprising the data processing device or system according to the third aspect of the invention and a robot communicatively coupled to the data processing device or system. In some embodiments, the robot or the measurement device or system includes the data processing device or system.

A fifth aspect of the invention relates to a computer program comprising instructions that, when the program is executed on at least one processing device (e.g., one or more computers, one or more servers, one or more controllers, one or more ASICs, one or more FPGAs, one or more microcontrollers, etc.), causes the at least one processing device to perform the method according to the second aspect of the invention.

A sixth aspect of the invention relates to a computer-readable medium comprising instructions that, when executed by the at least one processing device, cause the at least one processing device to carry out the method according to the second aspect of the invention. In some embodiments, the readable medium is a non-transitory medium.

A seventh aspect of the invention relates to a data-carrying signal carrying the computer program according to the fifth aspect of the invention.

**BRIEF DESCRIPTION OF THE DRAWINGS**

In order to complement the description herein and to assist in a better understanding of the features of the invention, a set of drawings is attached hereto as an integral part of the said description, in which the following is illustratively and non-limitingly depicted:

FIG. 1 shows a constructive scheme of the system for determining pose accuracy, path accuracy and dynamic parameters of a robot;
FIG. 2 shows application examples for which, for example, the system and method of the present disclosure may be employed, such as, for example, but without limitation, measurement of movement of a end of a robot;
FIG. 3 shows an example of a path or position of a robot that may, for example, employ the method of the present disclosure, such as, for example, but without limitation, that describing a tool implemented on the end of a robot; and
FIG. 4 is a block diagram of the method for determining pose accuracy, path accuracy and dynamic parameters of a robot, introducing the calculation according to embodiments.

## DETAILED DESCRIPTION

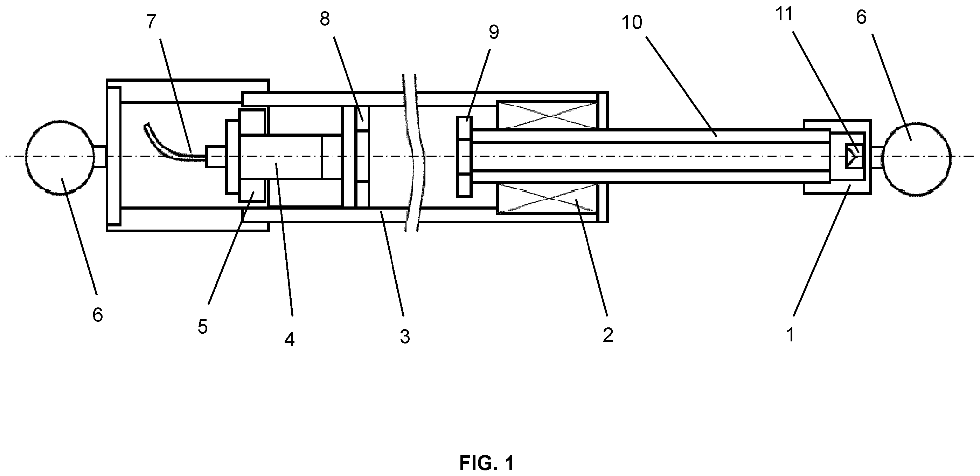

The system with a compact extendable type device with sensor (FIG. 1), which obtains the measurement between a reference point 15 and another robot point 14 of the robot element to be characterised, determines the pose accuracy and/or path accuracy 24 and/or dynamic parameters of a robot.

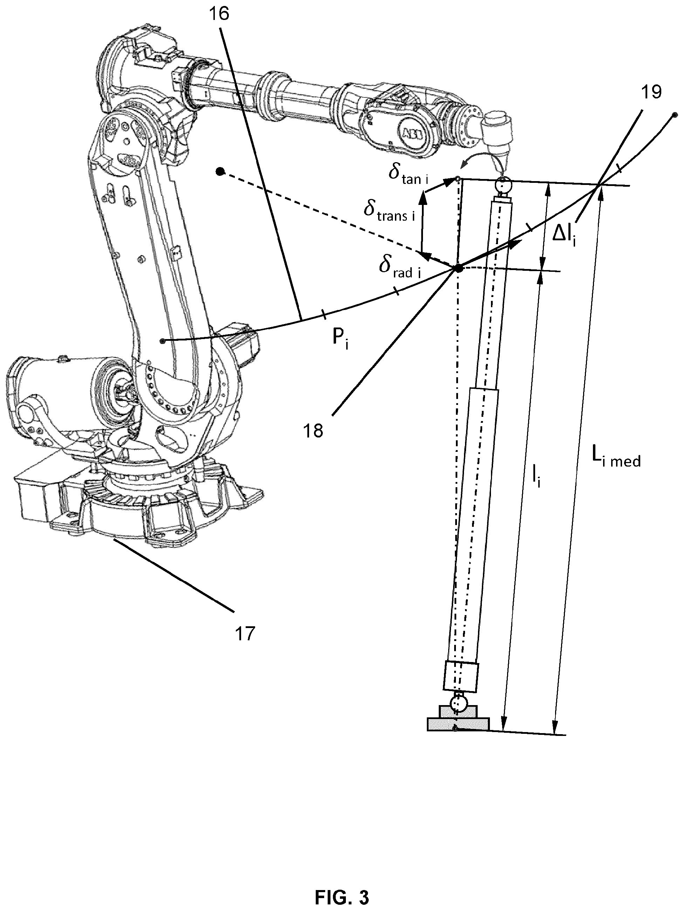

In this way, by measuring that distance, the pose accuracy and/or path accuracy 24 can be determined by obtaining the total deviations ($\Delta l_i$) of a position or each position of a path from the nominal position, as well as some or all of the components of that deviation (FIG. 3).

The components of the total deviation ($\Delta l_i$) are: radial deviation ($\delta rad_i$), according to the radius described by the movement to be performed by the element, transverse deviation ($\delta trans_i$), according to the normal vector of the plane containing the movement to be performed, and tangential deviation ($\delta tan_i$), orthogonal to the radial and transverse deviations.

In preferred embodiments, the components of the deviations are calculated according to equations

$$l_i = || \, \vec{p_i} - \vec{p_f} \, ||$$

$$\vec{u_i} = \frac{\vec{p_i} - \vec{p_f}}{l_i}$$

$$\Delta l_i = L_{i\,med} - l_i$$

$$\vec{\delta l_i} = \Delta l_i \vec{u_{i\,med}} \equiv \Delta l_i \vec{u_i}$$

The distance is measured and, knowing the nominal position, the deviation from the nominal position is obtained. Then, taking as a starting point the consideration that the vector formed by the nominal position and the fixed base point of the measurement system will be the same as the vector formed by the measured position and the fixed base point of the measurement system, and then applying geometrical and analytical calculations, the projected deviations in the direction of interest and, secondarily, the position in Cartesian coordinates are obtained.

Specifically, the determination of pose accuracy, path accuracy and dynamic parameters of a robot, preferably in robots used in operations requiring high precision is based on the set of measurements 22 obtained by the system and method with the described sensor device. It does not require expensive systems such as cameras or laser systems, the application of which cannot be carried out in situations of lack of space or in working conditions unfavourable for such equipment. Instead, it determines the deviations of a position or each position of a trajectory with high precision by means of a sensor, in a compact, robust and low-cost way. In preferred embodiments, a single distance measurement is made by calculating or determining one or more of: robot motion deviation, positioning accuracy, path accuracy and/or dynamic parameters of a robot.

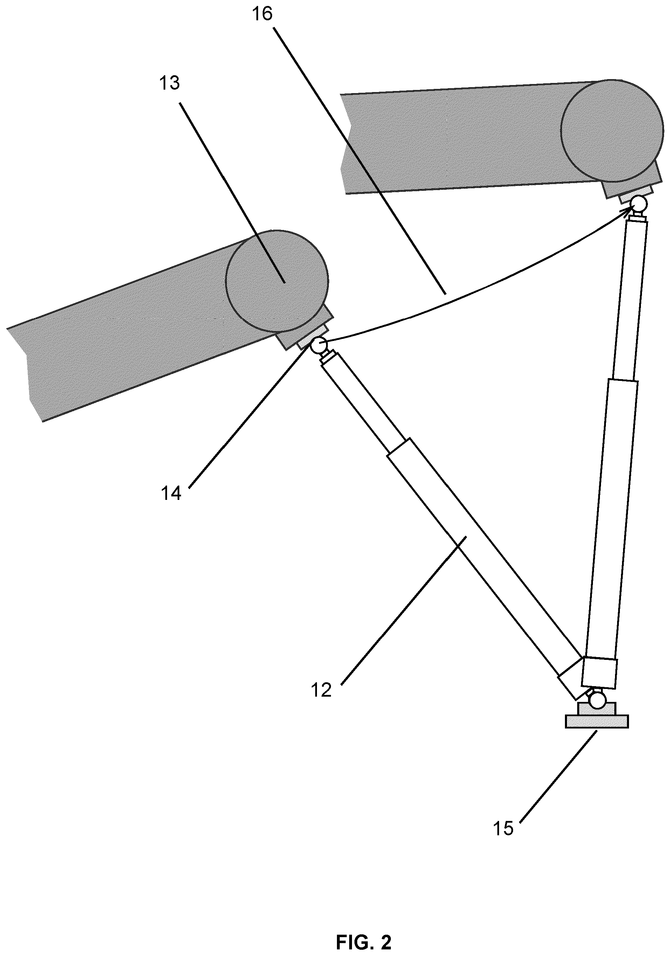

Thus, it is possible to obtain these data at any time without having to move the robot outside the installation in which it is located. The robot can also be a single arm robot as shown in FIG.3, or in FIG.2 between two positions.

This enables the robot to measure the precision of its movements and obtain its dynamic parameters in a versatile way and at a low equipment and operating cost.

The present system and method for determining pose accuracy, path accuracy and dynamic parameters of a robot at least comprise and/or carry out:

1. A measuring device 12 of an extendable type, according to FIG. 2, constructively depicted in FIG. 1, having an articulation 6 at each of its ends, one articulation 6 for a robot point 14 and the other articulation 6 for the reference point 15, which makes it possible to track the movements of a robot 17. That is, a first joint 6 is configured to join the robot point 14 and a second joint 6 is configured to join the reference point 15.

The measuring device 12 comprises a hollow body 3 inside of which a piston rod 10 slides, also generally hollow, through which a beam, generally but without limitation a laser beam, is passed to measure the distance between a reference point 15 and a point of a robot 14. It is not necessary to measure the orientation of the direction of the measurement or the use of additional sensors, as is the case with current systems.

2. The robot 17 is tracked based on the distance between a robot point 14 and a reference point 15. This distance is obtained by means of a sensor 4.

In particular embodiments, the reference point 15 is fixed. The reference point is any point in the world coordinate system, and need not to be inside the working area of the robot. In preferred embodiments, the reference point must be accessible. In some embodiments, the reference point is on a surface or an object such as, but not limited to, a wall, floor, table, another element of the robot itself, a tool, etc. The described system and method do not require the reference point 15 to be of a rotating turret type, so that in preferred embodiments the system and method do not comprise the turret reference point 15, as opposed to systems with encoders. Thus, in preferred embodiments, the system does not comprise encoders. Instead of a turret-type base, at the bottom (fixed part), the reference point has a magnetic base as at the movable end of the arm, which is much simpler. The dimensions can be smaller (even much smaller) and it confers more versatility for hard-to-reach places. In particular embodiments, the reference point element 15 and the robot point element 14 have the same characteristics and are preferably identical (except for possible manufacturing defects and tolerances).

The sensor 4 is part of the measuring device 12, as described in FIG. 1. In preferred applications, the sensor 4 is of interferometric head type and of micrometric or sub-micrometric, generally nanometric, resolution. In specific embodiments, it is performed with an interferometric laser sensor. The complexity of the system, by using a single sensor in preferred embodiments, is significantly reduced.

The sensor 4 is located inside the end of the body 3. The end of the body 3, where the sensor 4 is located, is the fixed part of the extendable system, constituted by an articulation 6.

In preferred applications, at least one of the articulations is of a spherical type, with the possibility of rotation. In particular embodiments, at least one of the articulations is a precision ball and socket joint. In some implementations, the extendable system of the measuring device 12 is of a telescopic type.

A conductive element 7 connected to the sensor 4, generally but without limitation, optical fibre, collects the signal coming from the sensor 4 for data analysis 23.

A retroreflector 11, generally but without limitation, a collimated reflector element, is located at the end of the piston rod 10 (retroreflective head 1) associated with the robot element 13 to be measured, which returns the beam and, by interferometric means obtained in the conditioner, provides the relative distance of the two ends of the device.

In some embodiments, the sensor 4 is provided with a orienting and/or aligning element 5 for orienting the incident beam leaving the retroreflector head 1. By means of the adjustment system, it is possible to make the incident beam leaving the sensor 4 arrive perpendicular to the retroreflector 11 and the reflected beam return parallel to the incident beam and reach the sensor again. In this way, it is possible to measure with high precision the relative movements between body 3 and piston rod 10.

3. A relative displacement and guidance mechanism 2. The mechanism can ensure proper transmission of micro-movements of the measuring device. The relative displacement and guidance mechanism allows the extension of the measuring device according to the movements made by the robot element(s), which are picked up by the sensor.

This mechanism is made up of a relative displacement and guidance mechanism 2 between piston rod 10 and body 3 and is generally a bearing. Preferably, the mechanism is a precision mechanism.

4. Determining the deviations of a robot 19 (FIG. 3) from its nominal position 18, based on the measurement between a robot element 13 and a reference point 15.

To measure the position of the robot element 13, the device is positioned at a point in space, generally fixed in the robot's working space, and the end of the rod 10 is fixed to a flange of the robot (or to another robot element 13 or element coupled to it). As the robot moves, it slides the piston rod 10 over the body 3.

With this body 3, the robot's movements can be tracked, as at both ends there is a articulation 6, which allows the robot to be tracked.

The simplicity of its installation means that it can be operated by unskilled personnel and can be used for remote testing, as it can be integrated into an industrial network or the Internet.

The range of the measuring device 12 is regulated by the piston rod stop 9 and the travel limit stop 8 (FIG. 1). The upper measurable limit is delimited by the maximum relative space between the piston rod stop 9 and the travel limit stop 8. Similarly, the lower measurable limit corresponds to the contact between the two elements.

In this way, a robot tracking element is obtained, without the need for more sophisticated equipment, such as a laser tracker that optically tracks the robot's movement, which is normally more expensive. Thus, in preferred embodiments, the system of the present invention comprises neither a laser tracker nor a camera.

5. Obtaining the deviations in any or all of the radial, transversal and/or tangential components of the robot's movements, in accordance with the path executed, from projections of the robot's deviations with respect to its nominal position, according to the geometry that it has in each nominal position of the path.

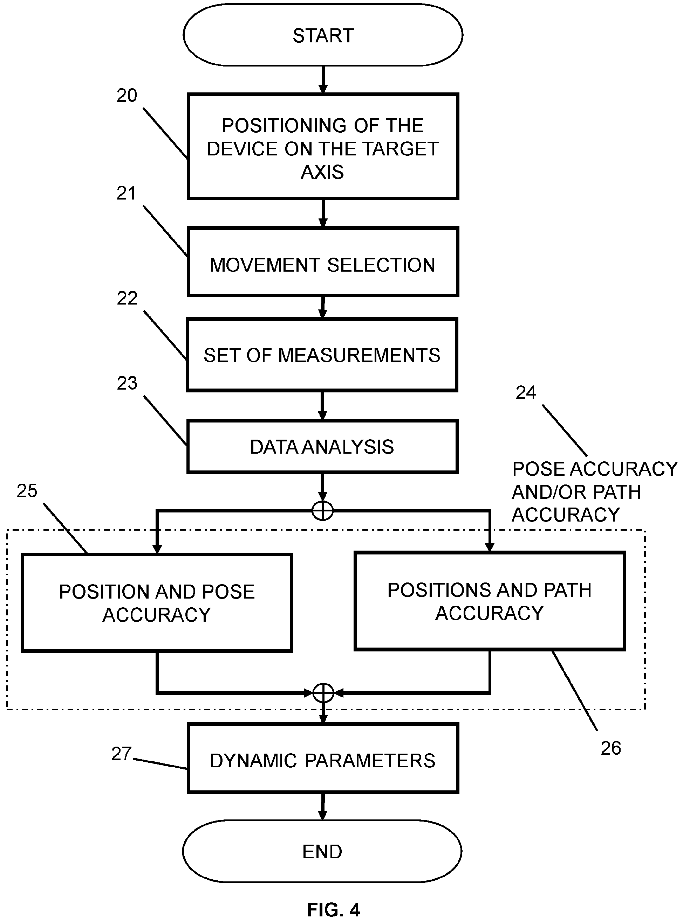

With this measuring device 12 or a combination of several measuring devices it is possible to measure two characteristics in the measuring process (FIG. 4):

- The position and pose accuracy 25.
- The positions and path accuracy 26.

For the determination of each of these characteristics, the procedure described in FIG. 4 is followed, for which the positioning of the device on the target axis 20 is carried out, positioning the device joint at the point of the robot element 13 whose positioning accuracy and/or path accuracy 24 is to be measured, and the selection of the movement 21 is performed.

The procedure for determining the position and its accuracy 25 and/or the positions and path accuracy 26 is based on a calculation of a geometrical algorithm inasmuch as, at any time, it is based on obtaining the distance from a robot to a point with a nanometric system.

Once the position has been obtained, the dynamic parameters 27 (process of obtaining dynamic parameters) can be obtained by algorithms for each element of the robot whose position has been determined (FIG. 4).

The precision of the paths 16 makes it possible to see the behaviour of the robot 17 under the combined intervention of several axes. The final result of the uncertainty is to see the combined behaviour of the different axes of the robot 17 and of the robot 17 control itself.

The system and method can be applied for the function of the pose accuracy and/or the path accuracy of any of the axes or of the TCP, i.e. of the terminal element of the robot.

Methods of the present disclosure, according to embodiments of the invention, may include one, several or all of the stages described above in relation to the measurement process and/or the dynamic parameter process.

In some embodiments, the system comprises: the sensor for distance measurement; the at least one processor; the at least one memory; the extendable type measuring device with a joint at each end; the relative displacement and guidance mechanism configured to extend the measuring device according to the movements of the robot; and, optionally, the robot. That is, in such embodiments, the system comprises only these components (comprising the robot in only some of these embodiments) and no other components (such as, for example, turrets, encoders, laser trackers, camera, etc.).

In this text, the words "comprises", "includes" and variants thereof (such as "comprising", "including", etc.) are not to be interpreted in an exclusive manner, i.e. they do not exclude the possibility that what is described includes other elements, steps, etc.

On the other hand, the invention is not limited to the specific embodiments described, but also covers, for example, variants which can be realised by the average person skilled in the art (e.g. as regards the choice of materials, dimensions, components, configuration, etc.), within the scope of what is apparent from the claims.

**Claims**

1. A system comprising:

   a sensor for distance measurement;
   at least one processor communicatively coupled with the sensor;
   at least one memory;
   an extendable type measuring device with an articulation at each end, a first articulation being configured to attach to a robot point and a second articulation being configured to attach to a reference point, the measuring device being configured to allow tracking of movements of a robot, and the sensor being arranged on the measuring device; and
   a relative displacement and guidance mechanism configured to extend the measuring device according to the movements of the robot; and
   wherein the at least one processor and the at least one memory are configured to perform the following:

   tracking the robot from a distance between the robot point and the reference point based on one or more sensor distance measurements;
   determining deviations of the robot from a nominal position of the robot from the one or more measurements between the robot point and the reference point;
   calculating deviations in robot movements, when the robot executes a path, at least based on projections of the robot's deviations from its nominal position according to a robot geometry held at each nominal position of the path.

2. The system according to claim 1, wherein the at least one processor and the at least one memory are further configured to determine a positioning accuracy of the robot and/or a trajectory accuracy of the robot and/or dynamic parameters of the robot.

3. A system according to any one of the preceding claims, wherein the calculated deviations comprise one or more of: total deviation ($\Delta l_i$), radial deviation ($\delta rad_i$) according to a radius described by the motion to be performed by the robot element, transverse deviation ($\delta trans_i$) according to a vector normal to a plane containing the motion to be performed by the robot element, and tangential deviation ($\delta tan_i$) orthogonal to each of the radial and transverse deviations.

4. A system according to any one of the preceding claims, wherein the measuring device comprises a hollow body with a piston rod arranged to slide through the hollow body; and wherein the sensor is mounted on the hollow body configured to measure the distance through the hollow body and, optionally, the piston rod.

5. A system according to any one of the preceding claims, wherein the sensor is of the interferometric head type and is at least micrometer resolution.

6. A system according to any one of the preceding claims, wherein the system comprises a single sensor, the sensor being the only sensor.

7. A system according to any one of the preceding claims, wherein the system does not comprise a laser tracker and/or a camera.

8. A system according to any one of the preceding claims, wherein the system does not comprise encoders.

9. A system according to any one of the preceding claims, wherein the one or more measurements is a single measurement.

10. A system according to any one of the preceding claims, wherein the robot is a single arm robot.

11. A method comprising:

tracking a robot from a distance between a robot point and a reference point external to the robot by means of distance measurements from a sensor;
determining deviations of the robot from its nominal position from the distance measurements;
calculating deviations in movements of the robot, according to a path executed by the robot, at least based on projections of the deviations of the robot from its nominal position according to a robot geometry held at each nominal position of the path:
wherein the robot is tracked by:

an extendable type measuring device with a joint at each end, wherein a first joint is attached to the robot point and a second joint is attached to the reference point, wherein the measuring device comprises a sensor for distance measurement; and
a relative displacement and guiding mechanism configured to extend the metering device according to the movements of the robot.

12. The method according to claim 11 further comprising determining a pose accuracy of the robot and/or a path accuracy of the robot and/or dynamic parameters of the robot.

13. The method according to claim 12 further comprising:

commanding movement of the robot according to a predetermined trajectory; and
commanding the robot to stop moving the robot when the determined motion accuracy and/or path accuracy and/or dynamic parameters are outside a predetermined range associated with a performance determined to be acceptable.

14. A method according to any one of claims 11-13, wherein calculating deviations in robot motions comprises calculating one or more of the following deviations: total deviation ($\Delta l_i$), radial deviation ($\delta rad_i$) according to a radius described by the motion to be performed by the robot element, transverse deviation ($\delta trans_i$) according to a normal vector of a plane containing the motion to be performed by the robot element, and tangential deviation ($\delta tan_i$) ortho-

gonal to each of the radial and transverse deviations.
15A method according to any one of claims 11-14, wherein the sensor is arranged in an extendable type measuring device having a joint at each of its ends, a first joint being configured to attach to a robot point and a second joint being configured to attach to a reference point.

**FIG. 1**

FIG. 2

**FIG. 3**

**FIG. 4**

Europäisches
Patentamt

European
Patent Office

Office européen
des brevets

**EUROPEAN SEARCH REPORT**

Application Number

EP 25 17 8800

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | TW 531 660 B (FAN GUANG-JAU [TW]; KE JR-WEI [TW]) 11 May 2003 (2003-05-11) * the whole document * | 1-15 | INV. B25J9/16 |
| X | WO 2019/148895 A1 (UNIV DALIAN TECH [CN]) 8 August 2019 (2019-08-08) | 1-3,5-15 | |
| Y | * the whole document * | 4 | |
| Y | US 5 428 446 A (ZIEGERT JOHN C [US] ET AL) 27 June 1995 (1995-06-27) | 4 | |
| A | * column 2, lines 1-25 * * column 2, line 56 - column 6, line 2 * * figures 1-5 * | 1-3,5-15 | |
| Y | WO 2021/255308 A1 (UNIV ZARAGOZA [ES]) 23 December 2021 (2021-12-23) | 4 | |
| A | * page 3, line 1 - page 5, line 29 * * page 7, line 8 - page 9, line 2 * * figures 2, 4 * | 1-3,5-8, 10-15 | |

**TECHNICAL FIELDS SEARCHED (IPC)**

B25J
G05B
G01B

The present search report has been drawn up for all claims

| Place of search | Date of completion of the search | Examiner |
|---|---|---|
| The Hague | 1 October 2025 | Orobitg Oriola, R |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 17 8800

This annex lists the patent family members relating to the patent documents cited in the above-mentioned European search report.
The members are as contained in the European Patent Office EDP file on
The European Patent Office is in no way liable for these particulars which are merely given for the purpose of information.

01-10-2025

| Patent document cited in search report | | Publication date | Patent family member(s) | | Publication date |
|---|---|---|---|---|---|
| TW 531660 | B | 11-05-2003 | NONE | | |
| WO 2019148895 | A1 | 08-08-2019 | CN<br>WO | 108393929 A<br>2019148895 A1 | 14-08-2018<br>08-08-2019 |
| US 5428446 | A | 27-06-1995 | NONE | | |
| WO 2021255308 | A1 | 23-12-2021 | ES<br>WO | 2886274 A1<br>2021255308 A1 | 16-12-2021<br>23-12-2021 |

EPO FORM P0459

For more details about this annex : see Official Journal of the European Patent Office, No. 12/82